# EUROPEAN PATENT APPLICATION

(11) **EP 4 412 305 A1**
(43) Date of publication of application: **07.08.2024**
(21) Application number: 22874683.0
(22) Date of filing: 19.09.2022
(51) Int. Cl.: H04W 28/16

(54) **METHOD FOR TRANSMITTING COORDINATION INFORMATION BETWEEN UES, AND UE AND STORAGE MEDIUM**

(30) Priority: 30.09.2021 CN 202111165693
(71) Applicant: ZTE Corporation, Shenzhen, Guangdong 518057 (CN)
(72) Inventor: XING, Weimin, Shenzhen, Guangdong 518057 (CN); LU, Youxiong, Shenzhen, Guangdong 518057 (CN)
(74) Representative: Vossius & Partner Patentanwälte Rechtsanwälte mbB
(86) International application number: PCT/CN2022/119542
(87) International publication number: WO 2023/051296

(57) **Abstract**

Provided in the present application are a method for a coordination information transmission between UEs, a UE and a storage medium. The method for the coordination information transmission between UEs includes: sending, by a first UE, a first message carrying coordination declaration information, the coordination declaration information indicating a coordination information receiving capability of the first UE.

## Description

### FIELD

The present application relates to a mobile communication technology, and relates to, for example, a method for a coordination information transmission between user equipments (UEs), a UE and a storage medium.

### BACKGROUND

Sidelink communication can be divided into two major types of communication modes according to a method for allocating sidelink communication resources. In a first type of mode (first mode or mode 1), a resource for a user equipment (UE) to send a sidelink signal comes from scheduling of a base station, while in a second type of mode (second mode or mode 2), a UE autonomously selects, according to a resource selection strategy, a resource from a resource pool in a network configuration or a pre-configured resource pool. The resource selection strategy mainly includes a sensing mechanism, a partial sensing mechanism, and a random selection mechanism. The configuration (including pre-configuration) herein refers to a process of notifying a device or a group of devices of some configurations or pre-configuration information.

With respect to the second type of mode mentioned above, autonomous selection of the resource by the UE will bring more resource collisions. In view of this, mutual coordination between UEs may be considered to reduce resource collisions and improve resource utilization efficiency, which requires support for a resource coordination function between the UEs. For example, a UE (referred to as a UE-A) may send coordination information to another UE (referred to as a UE-B), and the coordination information may help the UE-B better autonomously select the resource. The coordination information may be carried in a physical sidelink control channel (PSCCH), such as a first type of sidelink control information (SCI); the coordination information may also be carried in a physical sidelink shared channel, specifically in a second type of SCI or in high-layer information, such as a media access control (MAC) control element (CE) of an MAC layer and radio resource control (RRC) layer information; or, the coordination information may be carried in a physical sidelink feedback channel (PSFCH). The first type of SCI is located in a control channel, and the second type of SCI is located in a data channel.

However, since sending the coordination information will also occupy resources, it is difficult to make full use of the resource to send the resource coordination information at present. For example, if the UE-A sends the coordination information to a UE that does not support resource coordination, additional resource waste will be caused.

### SUMMARY

This disclosure provides a method for a coordination information transmission between user equipments (UEs), a UE and a storage medium.

In a first aspect, a method for a coordination information transmission between UEs is provided in an embodiment of this disclosure. The method includes: sending, by a first UE, a first message carrying coordination declaration information, where the coordination declaration information indicating a coordination information receiving capability of the first UE.

In a second aspect, a method for a coordination information transmission between UEs is provided in an embodiment of this disclosure. The method includes: receiving, by a second UE, a first message carrying coordination declaration information, where the coordination declaration information indicating a coordination information receiving capability of a first UE; and determining, by the second UE, the coordination information receiving capability of the first UE based on the coordination declaration information.

In a third aspect, a UE is provided in an embodiment of this disclosure. The UE includes: one or more processors; and a storage apparatus configured to store one or more programs, the one or more processors when the one or more programs are executed by the one or more processors, being caused to implement the method for the coordination information transmission between UEs of the first aspect.

In a fourth aspect, a UE is provided in an embodiment of this disclosure. The UE includes: one or more processors; and a storage configured to store one or more programs, the one or more processors, when the one or more programs are executed by the one or more processors, being caused to implement the method for the coordination information transmission between UEs of the second aspect.

In a fifth aspect, a storage medium including a computer-executable instruction is provided in an embodiment of this disclosure. The computer-executable instruction, when executed by a computer processor, is configured to execute the method for the coordination information transmission between UEs according to any one of possible embodiments of the first aspect to the second aspect.

### BRIEF DESCRIPTION OF THE DRAWINGS

FIG. 1 is a flow chart of a method for a coordination information transmission between user equipments (UEs) according to an embodiment of this disclosure;
FIG. 2 is a flow chart of another method for a coordination information transmission between UEs according to an embodiment of this disclosure;
FIG. 3 is a schematic structural diagram of a UE according to an embodiment of this disclosure; and
FIG. 4 is a schematic structural diagram of another UE according to an embodiment of this disclosure.

### DETAILED DESCRIPTION OF EMBODIMENTS

The embodiments of this disclosure will be described in detail below in combination with the accompanying drawings.

In a sidelink (SL) communication or direct communication system, when there is a service to be transmitted between devices, service data between the devices is not forwarded by other network devices, but is directly transmitted by a data source device to a target device, i.e. a direct communication between the devices. The SL communication refers to all direct communications below. In order to help a user equipment-B (UE-B) select or reselect a resource, coordination information sent by a user equipment-A (UE-A) may have the following three types:
Coordination information 1: a set of resources preferred for UE-B's transmission, which is referred to as a preferred resource set.
Coordination information 2: a set of resources non-preferred for UE-B's transmission, which is referred to as a non-preferred resource set.
Coordination information 3: a presence of expected/potential resource collision on the resources indicated by UE-B, which is referred to as a resource collision indication.

Since sending of coordination information by the UE-A also needs to occupy a resource, a case where the UE-A determines, completely by the UE-A itself, whether to send the coordination information might cause unnecessary sending, for example, the coordination information is sent to UEs not supporting resource coordination. The UEs not supporting resource coordination include a UE in the related art (a legacy UE), a new version of UE but not supporting or enabling resource coordination, or a UE not supporting or enabling specific coordination information (for example, some UEs may only support or enable coordination information 1, but may not receive coordination information 2 and coordination information 3) in the related art. Currently, one UE-A sending the coordination information may not determine whether a UE supports or enables resource coordination.

Therefore, this disclosure provides a method for a coordination information transmission between UEs, which causes the UE-B to send coordination declaration information, so as to help the UE-A determine whether one UE can receive the coordination information, and/or determine what type or types of coordination information one UE can receive. That is, the method helps the UE-A select a suitable receiver of the coordination information.

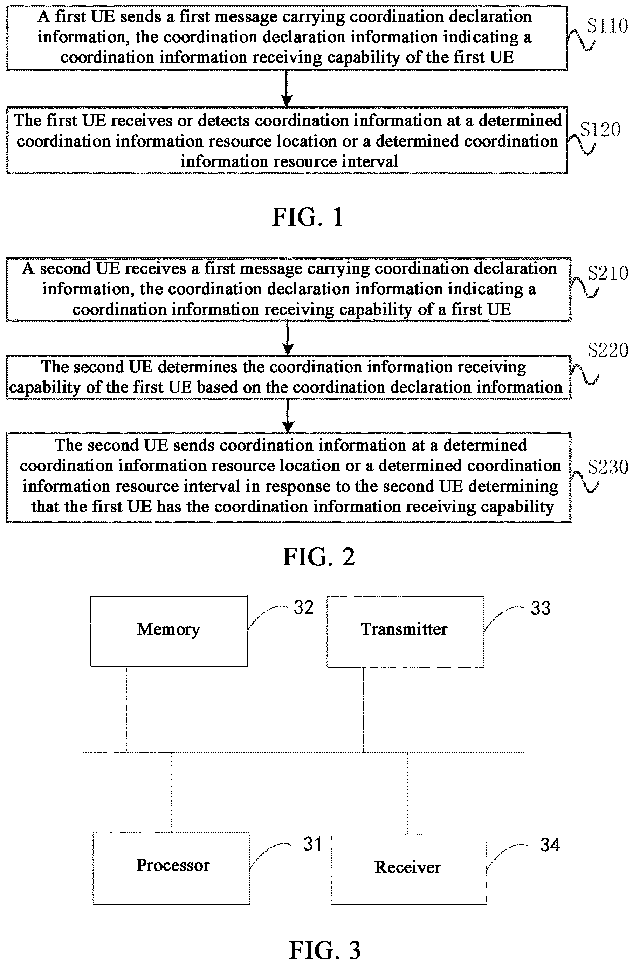

FIG. 1 is a flow chart of a method for transmitting coordination information between UEs according to an embodiment of this disclosure. As shown in FIG. 1, the method for transmitting coordination information between UEs according to the embodiment includes:
S 110, a first UE sends a first message carrying coordination declaration information, where the coordination declaration information is configured to indicate a coordination information receiving capability of the first UE.

The method for the coordination information transmission between UEs according to this embodiment is applied to the first UE. The first UE is any UE, and may be a UE supporting resource coordination, or a UE not supporting resource coordination. In order to enable other UEs to learn a resource coordination supporting capability of the first UE, i.e., whether the first UE supports the coordination information to be received or the first UE supports which type of coordination information to be received, the first UE may send the first message carrying the coordination declaration information. The first UE is the UE-B described above. The first message sent by the first UE may be any information, for example, information configured to transmit data or information configured to transmit control information. The first message may be, for embodiment, a physical sidelink control channel (PSCCH) or a physical sidelink shared channel (PSSCH). The coordination declaration information is carried at a specific location of the first message to indicate the coordination information receiving capability of the first UE, such that other UEs receiving the first message can learn the coordination information receiving capability of the first UE based on the coordination declaration information, and determine whether to send the coordination information to the first UE. Thus, a collision between resources used by the first UE and other UEs can be avoided. When the first UE does not support receiving the coordination information, sending of invalid coordination information can also be avoided, thereby saving transmission resources. The coordination information receiving capability of the first UE may be information such as whether the first UE supports receiving the coordination information, a type of the coordination information that is supported to be received by the first UE, etc.

After the first UE sends the first message carrying the coordination declaration information, the UE receiving the first message can learn the coordination information receiving capability of the first UE, for example, whether the first UE supports receiving the coordination information and a type of the supported coordination information such that another UE can select whether to send the coordination information to the first UE upon determining that a collision occurs in a resource used by the first UE, thereby avoiding resource waste caused by sending excessive coordination information on the basis of achieving resource coordination.

A high layer or a network may enable or disable a resource coordination function, for example, a resource for transmitting (sending or receiving) the coordination information may be configured in a resource pool; the resource coordination function may be explicitly enabled in the resource pool; and the resource coordination function of a device may be enabled by a high layer signaling. A SL communication may be unicast, broadcast, or multicast. SL devices obtain resources for communication in an SL resource pool, and the SL devices may have different resource coordination capabilities or different resource coordination functions. Even if the resource coordination function is enabled in a whole network or resource pool, a certain UE in the resource pool may not necessarily enable the resource coordination function. Further, even if the UE enables the resource coordination function, the UE currently may not know whether another UE also enable the resource coordination function.

In order to prevent one SL device from sending the coordination information to another SL device that fails to receive the coordination information, this disclosure enables the SL device to send the coordination declaration information for declaring whether to support or enable a certain resource coordination function. For example, the UE indicates the coordination declaration information in the sent PSCCH/PSSCH. In an example, the coordination declaration information indicates whether to support or enable the resource coordination function, or indicates which type of resource coordination information is supported or enabled. In an embodiment, a UE may carry coordination declaration information in sidelink control information (SCI) to indicate whether to support or enable the resource coordination function. In an example, the coordination declaration information may be added to the SCI, since the coordination information has timeliness to some extent and is generally obtained by or only by detecting a physical layer signaling, such as the SCI, and further, all receiving UEs around the physical layer signaling may performs decoding and receiving.

In an embodiment, the coordination declaration information is carried in SCI of the first message. The SCI is a first type in a control channel of SCI or a second type of SCI in a data channel.

When the coordination declaration information is carried in the SCI, a reserved bit of the SCI may be configured to indicate the coordination declaration information, a reserved value of an existing information field in the SCI may be configured to indicate the coordination declaration information, or a combination indication of multiple existing information fields in the SCI may be configured to indicate the coordination declaration information.

The coordination declaration information includes at least one of: an indication of supporting receiving the coordination information; and an indication of a type of the supported coordination information. That is, the coordination declaration information may include the indication of supporting receiving the coordination information. If the first UE does not send the coordination declaration information, it may be considered that the first UE does not support receiving the coordination information. Alternatively, the coordination declaration information may also include an indication of not supporting receiving the coordination information. The coordination declaration information may further include the indication of a type of the supported coordination information.

In an embodiment, the coordination declaration information indicates whether a first UE enables or supports a resource coordination function. In an example, when the indication is true, it is indicated that the first UE enables or supports the resource coordination function. Alternatively, when the indication is true, it is indicated that the first UE enables or supports the resource coordination function based on a resource collision indication.

In an embodiment, the coordination declaration information indicates a type of the resource coordination function enabled or supported by the first UE. In an example, the value indicated by the coordination declaration information may be configured to indicate that the first UE enables or supports one or more types of resource coordination functions, and may also indicate that the first UE does not enable or support all types of resource coordination functions. For example, in an embodiment, an M bit is configured to indicate a combination of the supported or enabled resource coordination types. That is, when the M bit is set to a certain value or sequence number, it is indicated that the first UE enables or supports one or more coordination information types of the resource coordination function corresponding to the certain value. A specific mapping relation between one value and the sequence number described above and the combination of resource coordination types may be predefined by a network configuration or protocol. For example, in an embodiment, an N-bit map is configured to indicate N types of resource coordination in one-to-one correspondence. When a certain bit in an N bit is set to be true, it is indicated that the first UE enables or supports the resource coordination function of the corresponding type of the coordination information.

In an embodiment, a reserved bit of an SCI is configured to indicate the coordination declaration information. For example, for the SCI format in the related art, some bits are used as the reserved bit. A sender in the related art typically sets the reserved bit to a special value, e.g. 0, while a receiver in the related art will ignore the value of the reserved bit. The first UE may carry the coordination declaration information in the reserved bit, a legacy UE may receive the SCI without being affected, and the UE as a second UE may receive the coordination declaration information in the reserved bit. Further, a reserved value of the existing information field in the SCI may also be configured to indicate the coordination declaration information, or a combination of values of multiple existing information fields in the SCT may be configured to indicate the coordination declaration information. The combination may also be referred to as a reserved combination.

In an embodiment, an information bit in a new SCI format is configured to indicate the coordination declaration information, e.g., a new first type of SCI format, or a new second type of SCI format.

In an embodiment, an information bit in a media access control (MAC) control element (CE) is configured to indicate coordination declaration information. For example, a new MAC CE for resource coordination is defined, and a bit in the MAC CE is configured to carry the coordination declaration information.

In an embodiment, the first UE sends the first message carrying the coordination declaration information in response to determining that the first UE determines at least one of the following: a resource for transmitting the coordination information is configured in a resource pool in which the first message is located; a resource coordination function is enabled in the resource pool in which the first message is located; and the first UE enables the resource coordination function. The first UE may send the coordination declaration information only when the resource coordination function is enabled in a system, network, or high-layer configuration. That is, a UE supporting the resource coordination function may perform operations for the resource coordination only on the premise that the resource coordination is enabled in a system level configuration. The system, the network or the high layer configures a resource for transmitting (sending or receiving) the coordination information in the resource pool used by the UE. A configuration of the resource for transmitting the coordination information in the resource pool includes at least one of: a period of a coordination information resource in time domain, a resource block set occupied by the coordination information resource in a frequency domain, and a minimum interval between the coordination information resource and a resource corresponding to the coordination information resource in time domain. Further, the resource corresponding to the coordination information resource is a resource in which the first message is located; or the resource corresponding to the coordination information resource is a reserved resource indicated by the SCI carried in the first message. The system, the network or the high layer enables the resource coordination function in the resource pool used by the first UE, and the coordination function may include functions corresponding to the one or more coordination information types described above. The system, the network or the high layer enables the UE to enable the resource coordination function, and the coordination function may include functions corresponding to the one or more coordination information types described above.

In an embodiment, the enabled resource coordination function configured by the system, the network or the high layer is used for the UE to determine whether the UE may perform the resource coordination function. Accordingly, the coordination declaration information is received for the UE to determine whether another UE may perform resource coordination, and the coordination declaration information is sent for the UE to notify another UE of whether the other UE may perform resource coordination.

Alternatively, after the first UE sends the first message carrying coordination declaration information, S 120 that the first UE receives or detects the coordination information at a determined coordination information resource location or a determined coordination information resource interval may further be executed. If the coordination declaration information in the first message sent by the first UE indicates that the first UE supports receiving the coordination information, the first UE may receive or detect the coordination information at the determined coordination information resource location or a determined coordination information resource interval of when there is a resource collision.

The method further includes: before the first UE receives or detects the coordination information at the determined coordination information resource location or the determined coordination information resource interval, determining, by the first UE, the coordination information resource location or the coordination information resource interval at a resource location of the first message; or determining, by the first UE, the coordination information resource location or the coordination information resource interval at a location of a reserved resource indicated by the first message. That is, the first UE needs to determine the coordination information resource location or the coordination information resource interval and gives indication in the first message.

In an embodiment, a resource or resource interval for the coordination information is determined based on a resource location of a first message sent by a first UE. For example, the coordination information has timeliness and must be sent or received within a certain period of time to have an effect of resource coordination. Therefore, the determined coordination information resource and the determined coordination information resource interval must be within a certain delay. For example, if a maximum delay is provided as x and a moment of the resource location of the first message is provided as n, the resources or resource interval is between n and n+x.

In an embodiment, the coordination information resource location or the coordination information resource interval information is determined based on the location of a reserved resource indicated by the first message sent by the first UE. For example, when the coordination information is a resource collision indication, the resource collision indication must be sent or received before a colliding resource i.e. before the reserved resource described above, so as to have an effect of resource coordination. Moreover, in consideration of factors such as a processing delay, the coordination information must be sent in advance. For example, if a moment of the resource reserved by the first message, i.e. the location of the colliding resource, is provided as n, and a minimum interval between the reserved resource and a resource of the coordination information is provided as k, the resource or resource interval is not later than n-k. In an embodiment, the resource of the coordination information is located on a time slot having a coordination information transmission resource nearest to (including) n-k. Further, k is configured by the network, the system or the high layer.

According to the method for the coordination information transmission between UEs according to the embodiments of this disclosure, the first UE sends the first message carrying the coordination declaration information, where the coordination declaration information indicates the coordination information receiving capability of the first UE, such that the second UE receiving the coordination declaration information can select whether to send the coordination information to the first UE upon determining that a collision occurs in the resource used by the first UE, thereby avoiding resource waste caused by sending excessive coordination information on the basis of achieving resource coordination.

FIG. 2 is a flow chart of another method for transmitting coordination information between UEs according to an embodiment of this disclosure. As shown in FIG. 2, the method for the coordination information transmission between UEs according to this embodiment includes the following:
S210, a second UE receives a first message carrying coordination declaration information, where the coordination declaration information indicates a coordination information receiving capability of a first UE.

The method for the coordination information transmission between UEs according to this embodiment is applied to the second UE. The second UE is any UE, and is a UE supporting sending the coordination information. The second UE may receive or detect the first message and obtain the coordination declaration information carried in the first message to determine the coordination information receiving capability of the first UE, and accordingly determine whether to send the coordination information to the first UE. The second UE is the UE-A described above. The first message may be any information, for example, information for data transmission, or information for control information transmission. The first message may be, for example, a PSCCH or a PSSCH.

S220, the second UE determines the coordination information receiving capability of the first UE based on the coordination declaration information.

The second UE determines the coordination information receiving capability of the first UE based on the received coordination declaration information, and then determines whether to send the coordination information to the UE. Thus, a collision between resources used by the first UE and another UE can be avoided. When the first UE does not support receiving the coordination information, sending invalid coordination information can also be avoided, thereby saving transmission resources. The coordination information receiving capability of the first UE may be information such as whether the first UE supports receiving the coordination information, a type of the coordination information that is supported to be received by the first UE, etc.

After the second UE receives the first message carrying the coordination declaration information, the coordination information receiving capability of the first UE may be learnt, for example, whether the first UE supports receiving the coordination information and a type of the supported coordination information. In this way, the second UE can select whether to send the coordination information to the first UE upon determining that a collision occurs in the resource used by the first UE, thereby avoiding resource waste caused by sending excessive coordination information on the basis of achieving resource coordination.

In an embodiment, coordination declaration information is carried in SCI of the first message. The SCI is a first type of SCI in a control channel or a second type of SCI in a data channel.

The coordination declaration information includes at least one of: an indication of supporting receiving the coordination information; and an indication of a type of the supported coordination information. That is, the coordination declaration information may include an indication of supporting receiving the coordination information. If the second UE does not receive the coordination declaration information, it may be considered that the first UE does not support receiving the coordination information. Alternatively, the coordination declaration information may also include an indication of not supporting receiving the coordination information. The coordination declaration information may further include the indication of a type of the supported coordination information.

Alternatively, the method further includes: after the second UE determines the coordination information receiving capability of the first UE based on the coordination declaration information, at S230, the second UE determines that the first UE has the coordination information receiving capability, and then the second UE sends the coordination information at a determined coordination information resource location or a determined coordination information resource interval. After the second UE determines that the first UE has the coordination information receiving capability based on the received first message, if a collision occurs in resources used by the first UE, the first UE may send the coordination information at the coordination information resource location or the coordination information resource interval determined based on the first message. Alternatively, the second UE may further send the coordination information at the determined coordination information resource location or the determined coordination information resource interval, if other possibilities exist.

In an embodiment, the method further includes: before the second UE sends the coordination information at the determined coordination information resource location or at the determined coordination information resource interval in response to the second UE determining that the first UE has the coordination information receiving capability, determining that the second UE has detected a resource collision. Determining that the second UE has detected the resource collision includes: determining that the second UE has detected that a resource reserved by one second information at least partially overlaps a reserved resource indicated by the first message; or, determining that the second UE has detected that the second UE fails to perform the reception at a location of a reserved resource indicated by the first message.

In an embodiment, the method further includes: before the second UE sends the coordination information at the determined coordination information resource location or the determined coordination information resource interval, determining, by the second UE, a target UE sending the coordination information based on priorities of colliding resources. The UE sending the coordination information (i.e. the second UE) sends a resource collision indication to one or more UEs having lower priorities.

In an embodiment, the second UE is a destination receiver of the first message or a transmission on a reserved resource indicated by the first message.

That is, the second UE sending the coordination information must satisfy at least one of the following conditions: the first UE has the coordination information receiving capability; the second UE has detected a resource collision; the first UE is determined as a target UE for the coordination information based on the priority; the second UE is a destination receiver of the first message or the transmission on the reserved resource indicated by the first message; and a configuration or a pre-configuration enables a destination receiver other than a destination receiver of the first message or the transmission on the reserved resource indicated by the first message to transmit the coordination information.

The method for the coordination information transmission between UEs according to the embodiments of this disclosure is further described in detail below in combination with two specific embodiments.

In the first embodiment, a condition to be satisfied in which a UE as a second UE sends coordination information to a first UE is described by taking the coordination information as a resource collision indication as an example. There are two common situations in which one UE has detected that there is a collision in a resource reserved by the first UE: 1) the UE has detected that resource reserved by another UE partially or completely overlaps the resource reserved by the first UE; and 2) the UE fails to perform the SL reception on the resource reserved by the first UE. In an embodiment, the UE is a destination receiver of the transmission on the reserved resource by the first UE, but the UE fails to perform reception due to a half-duplex restriction since the UE has to perform other operations, such as a SL sending or other sending.

An example in which the UE has detected that the resources reserved by another UE partially or completely overlaps the resource reserved by the first UE is described below, although it should be noted that the collision that the UE may not perform the SL reception on the resource reserved by the first UE is also applicable. The following scenario is described: a UE1 and a UE2 need to send a SL transmission. Assuming that a UE3 is a destination receiver for the UE1, a UE4 is a destination receiver for the UE2, and a UE5 is not a destination receiver for the UE1 and the UE2, but the UE5 may detect SCIs of the UE1 and the UE2, the UE5 may also obtain the coordination declaration information in a case where the coordination declaration informations are carried in these SCIs.

The UE1 sends an SL transmission 1, e.g. one PSSCH and a PSSCH (first message) associated with the PSSCH, and the UE2 sends an SL transmission 2. Moreover, a resource 1 reserved by the SCI in the SL transmission 1 partially or completely overlaps a resource 2 reserved by the SCI in the SL transmission 2. That is, the resources reserved by the UE1 and the UE2 collides.

In an embodiment, the coordination declaration information is carried in SCI of a first message sent by a UE1, and the declaration information indicates that the UE1 may receive a resource collision indication, or indicates that a resource collision indication is enabled. A UE2 does not support or enable the resource collision indication (for example, the UE2 is a legacy UE and fails to receive the coordination information), and thus the coordination declaration information is not carried in SCI of second information sent by the UE2, or the declaration information carried in SCI indicates that the UE2 does not support or enable the resource collision indication. In an embodiment, a UE3 finds that a reserved resource 1 overlaps a resource 2 by detecting a resource reservation indication in these SCIs. That is, there is a resource collision. If the UE3 supports sending the coordination information indicating the resource collision, the UE3 finds, by detecting the coordination declaration informations in these SCIs, that a UE1 may receive the coordination information indicating the resource collision while a UE2 may not receive the coordination information. In this case, the UE3 may send the coordination information to the UE1 for notifying the UE1 of the resource collision.

That is, in an embodiment, a necessary condition for a UE supporting the resource coordination, as a second UE, to send the coordination information to one first UE includes that: the UE finds that there is a collision in a resource reserved by the first UE, the UE is a destination receiver for data sent by the first UE, and the coordination declaration information sent by the first UE indicates that a resource collision indication is supported or enabled.

In an embodiment, a UE4 finds that a reserved resource 1 overlaps a reserved resource 2 by detecting a resource reservation indications in SCIs. That is, there is a resource collision. In a case where the UE4 supports sending the coordination information indicating the resource collision, the UE4 finds, by detecting the coordination declaration informations in these SCIs, that a UE1 may receive the coordination information indicating the resource collision while a UE2 may not receive the coordination information. In this case, if the UE4, as a receiver for the colliding resource 2, is allowed to feed back the resource collision information to the UE1, the UE4 may send the coordination information to the UE1 for notifying the UE1 of the resource collision.

That is, in an embodiment, a necessary condition for a UE supporting resource coordination, as a second UE, to send coordination information to one first UE includes that: the UE finds that there is a collision in a resource reserved by the first UE, the UE is a destination receiver of one of multiple transmissions for the resource collision, and the coordination declaration information sent by the first UE indicates that the resource collision indication is supported or enabled. In an embodiment, a necessary condition for a UE, as a second UE, to send the coordination information to one first UE may further include that: a destination receiver other than a destination receiver of the first UE is enabled or allowed to send a resource collision indication; or, a destination receiver other than a destination receiver of the first UE, which must be a destination receiver of one of multiple transmissions for a resource collision, is enabled or allowed to send a resource collision indication.

In an embodiment, a UE5 finds that a reserved resource 1 overlaps a reserved resource 2 by detecting a resource reservation indications in the SCIs. That is, there is a resource collision. In a case where the UE5 supports sending the coordination information indicating the resource collision, the UE5 finds, by detecting the coordination declaration informations in these SCIs, that a UE1 may receive the coordination information indicating the resource collision while a UE2 may not receive the coordination information. In this case, the UE5 is not a destination receiver of the collided resource 1 or resource 2. If the UE5 is also allowed to send the resource collision information, the UE5 may send the coordination information to the UE1. If a destination receiver other than the destination receiver of the collided resource is not allowed to perform feedback, the UE5 also does not send a resource collision indication even if the collision is detected.

That is, in an embodiment, a necessary condition for a UE, as a second UE, to send coordination information to one first UE includes that: the UE finds that there is a collision in a resource reserved by the first UE; the coordination declaration information sent by the first UE indicates that a resource collision indication is supported or enabled; and a destination receiver other than the destination receiver of the first UE is enabled or allowed to send the resource collision indication.

In an embodiment, the following is configured by a high layer of network, or indicated by the first UE through the signaling such as the SCI or MAC CE: enabling or allowing a destination receiver other than a destination receiver of the first UE to send a resource collision indication; or enabling or allowing a destination receiver other than a destination receiver of the first UE, which must be a destination receiver of one of multiple transmissions for a resource collision, to send a resource collision indication.

In an embodiment, a UE1 and a UE2 do not support or enable a resource collision indication, and thus the coordination declaration informations are not carried in SCIs of the messages sent by the UE1 and the UE2, or the declaration informations carried by these SCIs indicates that a resource collision indication is not supported or enabled. In an embodiment, UE3-UE5 find that a reserved resource 1 overlaps a reserved resource 2 by detecting a resource reservation indications in these SCIs. That is, there is a resource collision. Even if the UE3-UE5 support sending the coordination information indicating the resource collision, the UE3-UE5 also do not send the resource collision indication even though the collision is detected since the UE3-UE5 find that none of the sender UEs for the collided resource supports or enables a resource collision indication.

In the second embodiment, a condition to be satisfied in which a UE, as a second UE, sends the coordination information to a first UE is described by taking the coordination information as a resource collision indication as an example. In an embodiment, when a UE finds a resource reservation collision by detecting SCIs (for example, the resource 1 and the resource 2 mentioned above collides) and finds that multiple UEs for the resource collision all support or enable receiving the resource collision indication, which UE the resource collision indication is sent to may be decided based on the priorities of the collided resources. In an embodiment, a UE sending the coordination information sends a resource collision indication to one or more UEs having lower priorities.

In an embodiment, a necessary condition for a UE, as a second UE, to send the coordination information to one first UE includes the following: the UE finds that there is a collision in a resource reserved by the first UE; the coordination declaration information sent by the first UE indicates that a resource collision indication is supported or enabled; the UE is a destination receiver of the first UE; and the priority of a transmission of the first UE is lower than the priority of the collided another UE or the transmission of the UE.

In an embodiment, a necessary condition for a UE, as a second UE, to send the coordination information to one first UE includes that: the UE finds that there is a collision in a resource reserved by the first UE; the coordination declaration information sent by the first UE indicates that a resource collision indication is supported or enabled; the UE is a destination receiver of a transmission that collides with a transmission of the first UE; and the priority of the transmission of the first UE is lower than the priority of the collided transmission. In an embodiment, a necessary condition for a UE, as a second UE, to send the coordination information to one first UE may further include that: a destination receiver other than a destination receiver of the first UE is enabled or allowed to send a resource collision indication; or a destination receiver other than a destination receiver of the first UE, which must be a destination receiver of one of multiple transmissions for a resource collision, is enabled or allowed to send a resource collision indication.

In an embodiment, a necessary condition for a UE, as a second UE, to send the coordination information to a first UE includes that: the UE finds that there is a collision in a resource reserved by the first UE; the coordination declaration information sent by the first UE indicates that a resource collision indication is supported or enabled; the UE, as a destination receiver other than a destination receiver of the first UE, is enabled or allowed to send the resource collision indication; and the transmission of the first UE has a lower priority or a higher priority number.

In an embodiment, a priority or priority number of the transmission of the first UE is indicated in the SCI.

In an embodiment, a necessary condition for a UE, as a second UE, to send the coordination information to one first UE further includes that: the UE supports or enables a resource coordination function. That is, the UE has a resource coordination information sending capability.

An embodiment of this disclosure further provides a UE. The UE is a first UE, and includes: a sending module configured to send a first message carrying the coordination declaration information, the coordination declaration information indicating a coordination information receiving capability of the first UE.

An embodiment of this disclosure further provides a UE. The UE is a second UE, and includes: a receiving module configured to receive a first message carrying coordination declaration information, the coordination declaration information indicating a coordination information receiving capability of a first UE; and a processing module configured to determine the coordination information receiving capability of the first UE based on the coordination declaration information.

FIG. 3 is a structural schematic diagram of a UE according to an embodiment of this disclosure. As shown in FIG. 3, the UE includes a processor 31, a memory 32, a transmitter 33 and a receiver 34. One or more processors 31 may be provided in the UE, and one processor 31 is taken as an example in FIG. 3. The processor 31 and the memory 32 in the UE may be connected by means of the bus or in other manners, and connection by a bus is taken as an example in FIG. 3.

As a computer-readable storage medium, the memory 32 may be configured to store a software program, a computer-executable program and a module, such as a program instruction/module corresponding to the method for the coordination information transmission between UEs in the embodiment of FIG. 1 of this disclosure. The processor 31 runs the software program, instruction and module stored in the memory 32, such that the UE performs at least one function application and data processing, i.e. implements the method for the coordination information transmission between UEs as described above.

The memory 32 may mainly include a program storage area and a data storage area. The program storage area may store an application required by an operating system and at least one function, and the data storage area may store data, etc. created based on use of a base station. Further, the memory 32 may include a high speed random access memory and may further include a nonvolatile memory, such as at least one disk memory, a flash memory device, or other nonvolatile solid state memory devices.

The transmitter 33 is a module or a combination of devices capable of transmitting a radio frequency signal into a space, for example, a combination including a radio frequency transmitter, an antenna, and other devices. The receiver 34 is a module or a combination of devices capable of receiving the radio frequency signal from the space, for example, a combination of a radio frequency receiver, the antenna, and other devices.

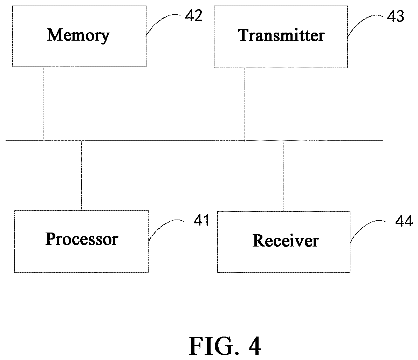

FIG. 4 is a structural schematic diagram of another UE according to an embodiment of this disclosure. As shown in FIG. 4, the UE includes a processor 41, a memory 42, a transmitter 43 and a receiver 44. One or more processors 41 may be provided in the UE, and one processor 41 is taken as an example in FIG. 4. The processor 41 and the memory 42 in the UE may be connected by means of a bus or in other manners, and connection by the bus is taken as an example in FIG. 4.

As a computer-readable storage medium, the memory 42 may be configured to store a software program, a computer-executable program and a module, such as a program instruction/module corresponding to the method for the coordination information transmission between UEs in the example of FIG. 2 of this disclosure. The processor 41 runs the software program, the instruction and the module stored in the memory 42, such that the UE performs at least one functional application and data processing, i.e. implements the method for the coordination information transmission between UEs as described above.

The memory 42 may mainly include a program storage area and a data storage area. The program storage area may store an application required by an operating system and at least one function, and the data storage area may store data, etc. created based on use of a base station. Further, the memory 42 may include a high speed random access memory and may further include a nonvolatile memory, such as at least one disk memory, a flash memory device, or other nonvolatile solid state memory devices.

The transmitter 43 is a module or a combination of devices capable of transmitting a radio frequency signal into a space, for example, a combination of a radio frequency transmitter, an antenna, and other devices. The receiver 44 is a module or a combination of devices capable of receiving the radio frequency signal from the space, for example, a combination of a radio frequency receiver, the antenna, and other devices.

An embodiment of this disclosure further provides a storage medium including a computer-executable instruction. The computer-executable instruction, when executed by a computer processor, executes a method for a coordination information transmission between UEs. The method includes: sending, by a first UE, a first message carrying the coordination declaration information, the coordination declaration information indicating the coordination information receiving capability of the first UE.

An embodiment of this disclosure further provides a storage medium including a computer-executable instruction. The computer-executable instruction, when executed by a computer processor, is configured to execute a method for a coordination information transmission between UEs. The method includes: receiving, by a second UE, a first message carrying coordination declaration information, coordination declaration information indicating a coordination information receiving capability of a first UE; and determining, by the second UE, the coordination information receiving capability of the first UE based on the coordination declaration information.

Generally, various embodiments of this disclosure can be implemented in hardware or special purpose circuits, software, logic, or any combination thereof. For example, some aspects can be implemented in hardware, while other aspects can be implemented in firmware or software that may be executed by a controller, a microprocessor, or other computing apparatuses, although this disclosure is not limited in this respect.

The embodiments of this disclosure can be implemented by execution of a computer program instruction by a data processor of a mobile apparatus, e.g., in a processor entity, or by hardware, or by a combination of software and hardware. The computer program instruction may be an assembly instruction, an instruction set architecture (ISA) instruction, a machine instruction, a machine-related instruction, a microcode, a firmware instruction, state setting data, or source codes or object codes written in any combination of one or more programming languages.

The block diagram of any logical flow in the accompanying drawings of this disclosure may represent program steps, or may represent interconnected logical circuits, modules, and functions, or may represent a combination of program steps and logical circuits, modules, and functions. The computer program may be stored in the memory. The memory may be of any type suitable for a local technical environment and may be implemented by using any suitable data storage technology, and includes, but not limited to, a read-only memory (ROM), a random access memory (RAM), an optical memory apparatus and system (digital video disc (DVD)) or a compact disc (CD). The computer-readable medium may include a non-transitory storage medium. The data processor may be of any type suitable for the local technical environment and includes, but not limited to, a general purpose computer, a special purpose computer, a microprocessor, a digital signal processor (DSP), an application specific integrated circuit (SAIC), a field-programmable gate array (FGPA), and a processor based on a multi-core processor architecture.

## Claims

1. A method for a coordination information transmission between user equipments, UEs, comprising:
sending, by a first UE, a first message carrying coordination declaration information, the coordination declaration information indicating a coordination information receiving capability of the first UE.

2. The method according to claim 1, wherein the coordination declaration information is carried in sidelink control information, SCI, of the first message.

3. The method according to claim 2, wherein the SCI is a first type of SCI in a control channel or a second type of SCI in a data channel.

4. The method according to claim 2, wherein the coordination declaration information is indicated by one of the following:
a reserved bit of the SCI;
a reserved value of an existing information field in the SCI; and
a combination indication of a plurality of existing information fields in the SCI.

5. The method according to any of claims 1-4, wherein the coordination declaration information comprises at least one of the following:
an indication of supporting receiving the coordination information; or
an indication of a type of the supported coordination information.

6. The method according to any of claims 1-4, wherein sending, by the first UE, the first message carrying coordination declaration information comprises:
sending the first message carrying the coordination declaration information in response to determining that the first UE determines at least one of the following:
a resource for transmitting the coordination information is configured in a resource pool in which the first message is located;
a resource coordination function is enabled in the resource pool in which the first message is located; or
the first UE enables the resource coordination function.

7. The method according to claim 6, wherein a configuration of the resource for transmitting the coordination information in the resource pool comprises at least one of the following:
a period of a coordination information resource in time domain;
a resource block set occupied by the coordination information resource in a frequency domain; or
a minimum interval between the coordination information resource and a resource corresponding to the coordination information resource in time domain.

8. The method according to claim 7, wherein the resource corresponding to the coordination information resource is a resource in which the first message is located, or the resource corresponding to the coordination information resource is a reserved resource indicated by SCI carried in the first message.

9. The method according to any of claims 1-4, further comprising: after the first UE sends the first message carrying the coordination declaration information,
receiving or detecting, by the first UE, the coordination information at a determined coordination information resource location or a determined coordination information resource interval.

10. The method according to claim 9, further comprising: before the first UE receives or detects the coordination information at the determined coordination information resource location or the determined coordination information resource interval,
determining, by the first UE, the coordination information resource location or the coordination information resource interval at a resource location of the first message; or
determining, by the first UE, the coordination information resource location or the coordination information resource interval at a location of a reserved resource indicated by the first message.

11. A method for a coordination information transmission between user equipments, UEs, comprising:
receiving, by a second UE, a first message carrying coordination declaration information, the coordination declaration information indicating a coordination information receiving capability of a first UE; and
determining, by the second UE, the coordination information receiving capability of the first UE based on the coordination declaration information.

12. The method according to claim 11, wherein the coordination declaration information is carried in sidelink control information, SCI, of the first message.

13. The method according to claim 12, wherein the SCI is a first type of SCI in a control channel or a second type of SCI in a data channel.

14. The method according to any of claims 11-13, further comprising: after the second UE determines the coordination information receiving capability of the first UE based on the coordination declaration information,
sending, by the second UE, the coordination information at a determined coordination information resource location or at a determined coordination information resource interval in response to the second UE determining that the first UE has the coordination information receiving capability.

15. The method according to claim 14, further comprising: before the second UE sends the coordination information at the determined coordination information resource location or at the determined coordination information resource interval in response to the second UE determining that the first UE has the coordination information receiving capability,
determining that the second UE has detected a resource collision.

16. The method according to claim 15, wherein determining that the second UE has detected the resource collision comprises:
determining that the second UE has detected that a resource reserved by one second message at least partially overlaps a reserved resource indicated by the first message; or
determining that the second UE has detected that the second UE fails to perform the reception at a location of a reserved resource indicated by the first message.

17. The method according to claim 15, further comprising: before the second UE sends the coordination information at the determined coordination information resource location or the determined coordination information resource interval,
determining, by the second UE, a target UE sending the coordination information based on priorities of colliding resources.

18. The method according to any of claims 11-14, wherein the second UE is a destination receiver of the first message or a transmission on a reserved resource indicated by the first message.

19. A user equipment, UE, comprising:
one or more processors; and
a storage configured to store one or more programs, the one or more processors, when the one or more programs are executed by the one or more processors, being caused to implement the method for the coordination information transmission between UEs according to any of claims 1-10.

20. A user equipment, UE, comprising:
one or more processors; and
a storage configured to store one or more programs, the one or more processors, when the one or more programs are executed by the one or more processors, being caused to implement the method for a coordination information transmission between UEs according to any of claims 11-18.

21. A computer-readable storage medium storing a computer-executable instruction, the computer-executable instruction being configured to execute the method for the coordination information transmission between user equipments, UEs, according to any of claims 1-18.
